# EUROPÄISCHE PATENTANMELDUNG

(11) **EP 2 647 312 A1**
(43) Veröffentlichungstag der Anmeldung: **09.10.2013**
(21) Anmeldenummer: 12196154.4
(22) Anmeldetag: 07.12.2012
(51) Int. Cl.: A47B 97/00

(54) **Gehäuse zur Anordnung in einer Aussparung einer Möbelplatte**

(30) Priorität: 04.04.2012 DE 202012101236 U
(71) Anmelder: Nitz engineering GmbH, 39042 Brixen (IT)
(72) Erfinder: Nitz, Rüdiger, 39040 Feldthurns (IT)
(74) Vertreter: Bettinger Schneider Schramm

(57) **Zusammenfassung**

Bereit gestellt wird ein Gehäuse zur Anordnung in einer Aussparung einer Möbelplatte. In dem Gehäuse kann eine Ladeeinheit angeordnet sein. Ferner wir eine Möbelplatte für ein Möbel, etwa einen Schreibtisch, einen Labortisch oder dergleichen, bereitgestellt mit einer Oberseite und einer Unterseite, wobei an der Unterseite der Möbelplatte eine Aussparung vorgesehen ist, in welcher das Gehäuse angeordnet ist.

## Beschreibung

### Gebiet der Erfindung

Die Erfindung betrifft ein Gehäuse zur Anordnung ein einer Aussparung einer Möbelplatte, wobei in dem Gehäuse eine elektronische Komponente angeordnet bzw. untergebracht sein kann. Ferner betrifft die Erfindung eine Möbelplatte für ein Möbel, etwa eine Arbeitsplatte eines Tisches, eines Schreibtisches oder eines Konferenztisches, eine Küchenarbeitsplatte, ein Wandelement, ein Regalboden oder dergleichen, wobei in der Möbelplatte eine Aussparung vorgesehen ist, in der das erfindungsgemäße Gehäuse angeordnet ist.

### Stand der Technik und Hintergrund der Erfindung

Im Stand der Technik sind Möbelplatten bekannt, welche ausgestaltet sind ein elektrisches Gerät mit Energie zu versorgen. Beispielsweise sind Arbeitsplatten, etwa für Schreibtische oder Labormöbel bekannt, welche an der Oberseite Anschlüsse, beispielsweise Steckdosen aufweisen. An der Steckdose kann ein Ladegerät angesteckt werden, mit dem ein elektrisches Gerät, etwa ein Mobiltelefon, aufgeladen werden kann.

Diese Anordnung hat allerdings den Nachteil, dass der Bereich der Arbeitsplatte, der die Steckdose aufweist, nicht anderweitig genutzt werden kann. Ein weiterer Nachteil liegt darin, dass etwa für das Aufladen elektrischer Geräte Stromkabel notwendig sind, um das elektrisches Gerät mit der Steckdose zu verbinden. Jedenfalls während des Ladevorgangs liegt das Ladekabel zumindest teilweise auf der Oberseite der Arbeitsplatte, etwa eines Schreibtisches, was die für die Arbeit zur Verfügung stehende Fläche einschränkt und darüber hinaus störend wirken kann. Ferner muss ständig darauf geachtet werden, dass man nicht am Ladekabel hängen bleibt, was dazu führen kann, dass das angeschlossene elektrische Gerät zu Boden fällt. Nachteilig ist darüber hinaus, dass entsprechende Ladekabel bzw. Ladegeräte mitgeführt werden müssen, um das elektrische Geräte an dem Tisch aufladen zu können. Die Mobilität und Flexibilität wird dadurch erheblich eingeschränkt.

### Aufgabe der Erfindung

Aufgabe der vorliegenden Erfindung ist es daher, Lösungen bereitzustellen, welche ein einfaches und komfortables Aufladen eines elektrischen Geräts ermöglichen, ohne hierfür an der Möbelplatte, etwa auf der Arbeitsfläche eines Schreibtisches Steckdosen vorsehen zu müssen. Die Lösungen sollen einfach zu realisieren sein, wobei insbesondere bereits bestehende Möbel bzw. Möbelplatten einfach mit dem erfindungsgemäßen System nachrüstbar sein sollen.

### Erfindungsgemäße Lösung

Diese Aufgabe wird erfindungsgemäß durch ein Gehäuse für eine elektronische Komponente, insbesondere Ladeeinheit, zur Anordnung in einer Aussparung einer Möbelplatte, sowie durch eine Möbelplatte für ein Möbel, die eine Aussparung aufweist, in der ein erfindungsgemäßes Gehäuse angeordnet ist, gemäß den unabhängigen Ansprüchen gelöst. Vorteilhafte Ausgestaltungen und Weiterbildungen der Erfindung sind in den jeweiligen abhängigen Ansprüchen angegeben. Bereitgestellt wird demnach ein Gehäuse für eine elektronische Komponente, insbesondere Ladeeinheit, zur Anordnung in einer Aussparung einer Möbelplatte, wobei das Gehäuse einen im Wesentlichen zylinderförmigen, vorzugsweise kreiszylinderförmigen Umriss aufweist, wobei das Gehäuse eine Ausnehmung in Form eines Zylindersegments aufweist, dessen Höhe h₁ kleiner ist als die Höhe h des Gehäuses und wobei durch die Ausnehmung
- eine im Wesentlichen senkrecht zu einer Unterseite des Gehäuses verlaufende erste Seitenwandung und
- eine im Wesentlichen parallel zu einer Oberseite des Gehäuses verlaufende zweite Seitenwandung
gebildet wird.

Durch die zylindersegmentförmige Ausnehmung wird ferner ein oberer Bereich bzw. Abschnitt des Gehäuses gebildet, der eine zylinderförmige Form mit einer Höhe h₂ aufweist. Die Summe aus der Höhe h₁ der zylindersegmentförmigen Ausnehmung und der Höhe h₂ des zylinderförmigen oberen Abschnittes des Gehäuses entsprechen der Höhe h des Gehäuses, d.h., h = h₁ + h₂.

Weil das Gehäuse einen zylinderförmigen Umriss aufweist, kann es in eine zylinderförmige Aussparung, etwa an der Unterseite einer Möbelplatte eingebracht werden. Es müssen keine zusätzlichen Aussparungen vorgesehen werden, sodass es ausreichend ist, etwa an der Unterseite der Möbelplatte ein zylinderförmiges Sackloch herzustellen, was bei einer Möbelplatte aus Holz besonders einfach mit Hilfe eines Forstnerbohrers (auch Astlochbohrer genannt) bewerkstelligt werden kann. Bei Möbelplatten, die aus einem harten Material bestehen, etwa aus Marmor, kann das Sackloch besonders einfach mit einem Hohlkernbohrer hergestellt werden. Die Vorbereitungsmaßnahmen, um das Gehäuse in die Möbelplatte einzubringen, werden so erheblich reduziert und vereinfacht.

Der obere, zylinderförmige Abschnitt des Gehäuses ist jener Teil des Gehäuses, der nach dem Einbringen des Gehäuses in die Aussparung an der Unterseite der Möbelplatte der Oberseite der Möbelplatte zugewandt ist, sodass die zylindersegmentförmige Ausnehmung von unten zugänglich ist, um etwa ein Kabel in die zylindersegmentförmige Ausnehmung einzuführen und an eine Anschlussbuchse, die an einer Seitenwandung der Ausnehmung vorgesehen ist, anzuschließen.

Die Form des Gehäuses ist insbesondere dann vorteilhaft, wenn in dem Gehäuse eine elektronische Komponente angeordnet wird oder angeordnet ist, die ausgestaltet ist, elektrische Energie drahtlos, vorzugsweise induktiv, an ein an der Oberseite der Möbelplatte relativ zur elektronischen Komponente anordenbares elektrisches Gerät zu übertragen, insbesondere zum Aufladen eines Energiespeichers des elektrisches Gerätes.

Die für die induktive Energieübertragung notwendige Spule der elektronischen Komponente ist vorzugsweise eine drahtgewickelte Spule, die im Wesentlichen ringförmig ausgestaltet ist und einen bestimmten Außendurchmesser aufweist. Der Durchmesser bzw. Innendurchmesser des oberen, zylinderförmigen Abschnittes des Gehäuses kann im Wesentlichen dem Außendurchmesser der Spule entsprechen und die Höhe h₂ des oberen, zylinderförmigen Abschnittes des Gehäuses kann im Wesentlichen der Höhe der Spule entsprechen. Dadurch kann das Gehäuse einerseits optimal an die Form der Spule angepasst werden und die Größe des Gehäuses minimiert werden und andererseits ist eine einfache Montage in eine Aussparung einer Möbelplatte und ein platzsparendes und einfaches Anschließen eines Kabels, etwa Daten oder Stromkabel, möglich.

Die erste Seitenwandung und die zweite Seitenwandung stehen im Wesentlichen senkrecht zueinander, wobei die erste Seitenwandung mit der Unterseite des Gehäuses abschließt.

Die erste Seitenwandung kann eine im Wesentlichen rechteckige Fläche aufweisen und die zweite Seitenwandung kann eine im Wesentlichen kreissegmentförmige Fläche aufweisen.

Vorteilhaft ist es, wenn der Mittelpunktswinkel der kreissegmentförmigen Fläche der zweiten Seitenwandung zwischen 60° und 180°, vorzugsweise zwischen 90° und 150° beträgt.

An der ersten Seitenwandung kann eine Anschlussbuchse vorgesehen sein, zum Koppeln der elektronischen Komponente mit einem Anschlusskabel, insbesondere Netz- und/oder Datenkabel. Durch das Vorsehen der Anschlussbuchse an der ersten Seitenwandung, d.h., der Seitenwandung die im Wesentlichen senkrecht zur Unterseite des Gehäuses steht, wird weitgehend verhindert, dass ein angeschlossenes Kabel bei einem an der Unterseite einer Möbelplatte, etwa einer Tischplatte, angeordneten Gehäuse einfach nach unten herausgezogen werden kann. Ein unbeabsichtigtes Entfernen des Anschlusskabel wird so verhindert.

Die Höhe der ersten Seitenwandung kann mindestens die Hälfte der Höhe des Gehäuses betragen.

In einer vorteilhaften Ausführungsform können randseitig am Gehäuse mindestens zwei, vorzugsweise mindestens drei Befestigungsmittel angeordnet sein.

Vorteilhaft ist es, wenn die Befestigungsmittel als Spreizklemmen ausgestaltet sind, die mit Schrauben an der Unterseite des Gehäuses befestigt sind, zum Verspreizen des Gehäuses in der Aussparung der Möbelplatte. Im nichtgespreizten Zustand liegen die Spreizklemmen jeweils in einer Aussparung an der Seitenwandung des Gehäuses. Durch das Festziehen der Schrauben spreizen sich die Spreizklemmen nach außen und ragen dann über die Seitenwandung des Gehäuses hinaus, sodass das Gehäuse in der Aussparung der Möbelplatte fest verspreizt ist. Vorteilhaft ist hierbei, dass eine besonders einfache Montage ermöglicht wird und lediglich ein Schraubenzieher für die Montage benötigt wird.

Die Oberseite des Gehäuses kann ein stabiles, nicht-metallisches Material aufweisen. Dadurch wird einerseits gewährleistet, dass die Oberseite des Gehäuses das elektromagnetische Feld, das von der Spule emittiert wird, nicht beeinflusst. Andererseits wird gewährleistet, dass die Oberseite des Gehäuses dem Bereich der Möbelplatte oberhalb Oberseite des Gehäuses zusätzliche Stabilität verleiht, insbesondere dann, wenn dieser Bereich nur eine geringe Stärke aufweist.

Bereitgestellt wird ferner eine Möbelplatte für ein Möbel, wobei die Möbelplatte eine Oberseite und eine Unterseite aufweist und wobei in der Möbelplatte, vorzugsweise an der Unterseite eine Aussparung vorgesehen ist, in der ein erfindungsgemäßes Gehäuse angeordnet ist. Besonders vorteilhaft ist es, wenn die Aussparung zylinderförmig, insbesondere kreiszylinderförmig ausgestaltet ist. Ganz besonders vorteilhaft ist es, wenn der Durchmesser der zylinderförmigen Aussparung im Wesentlichen dem Außendurchmesser des Gehäuses entspricht, sodass eine im Wesentlichen form- und/oder kraftschlüssige Anordnung des Gehäuses in der Aussparung ermöglicht wird.

In einer Ausgestaltung der Erfindung kann es vorteilhaft sein, wenn in dem Gehäuse eine elektronische Komponente angeordnet ist, die ausgestaltet ist, elektrische Energie drahtlos, vorzugsweise induktiv, an ein an der Oberseite der Möbelplatte relativ zur elektronischen Komponente anordenbares elektrisches Gerät zu übertragen, insbesondere zum Aufladen eines Energiespeichers des elektrisches Gerätes.

Damit kann auf Streckdosen oder andere Anschlüsse zum Aufladen elektrischer Geräte an der Oberseite der Möbelplatte verzichtet werden. Die Arbeitsfläche, etwa eines Schreibtischen oder eines Labortisches kann so effizienter genutzt werden. Ferner werden keine Kabel benötigt, um ein elektrisches Gerät aufzuladen. Das aufzuladende Gerät, etwa ein Smartphone, ein Tablett-PC, aber auch Akkumulator betriebene Handwerkzeuge müssen lediglich im Bereich der elektronischen Komponente abgelegt werden, was die Handhabung erheblich vereinfacht.

Die Möbelplatte kann zumindest eines aus Arbeitsplatte eines Tisches, Schreibtisches oder Konferenztisches, Küchenarbeitsplatte, Wandelement, Wandeinbauten, Ablageelement, und Regalboden umfassen.

Die Möbelplatte kann aus Holz, aus einem Kunststoff, aus Glas, aus einem Verbundwerkstoff, aus einem Holzverbundwerkstoff, aus einem Holzschichtstoff, aus einem Holzfaserwerkstoff, aus Polymethylmethacrylat (PMMA oder Plexiglas^{®}), aus Keramik oder aus Stein gefertigt sein. An der Oberseite der Möbelplatte kann eine Markierung vorgesehen sein, die die Position der in der Möbelplatte integrierten elektronischen Komponente anzeigt.

Die elektronische Komponente kann weiter ausgestaltet sein, Daten drahtlos an das elektrische Gerät zu übertragen und/oder Daten von dem elektrischen Gerät zu empfangen. Damit kann auch ein Datenabgleich zwischen einem an der elektronischen Komponente angeschlossenen weiteren elektrischen Gerät, etwa eine Datenverarbeitungseinrichtung, und einem auf der Möbelplatte abgelegten elektrischen Gerät bewerkstelligt werden, ohne dass Kabel oder anderer Verbindungen notwendig wären.

Die Stärke der Möbelplatte zwischen der Oberseite der Möbelplatte und einer Oberseite des in der Aussparung angeordneten Gehäuses kann zwischen 1 mm und 50 mm, vorzugsweise zwischen 2 mm und 5 mm betragen. Die Möbelplatte kann im Bereich der Aussparung verstärkt sein.

Vorteilhaft ist es, wenn die elektronische Komponente zumindest eine Spule aufweist, die vorzugsweise eine drahtgewickelte Spule umfasst, welche im Wesentlichen ringförmig ausgestaltet ist, einen Außendurchmesser zwischen 30 mm und 100 mm, vorzugsweise zwischen 40 mm und 45 mm, einen Innendurchmesser zwischen 15 mm und 25 mm, vorzugsweise zwischen 19 mm und 21 mm, und eine Dicke zwischen 1,5 mm und 2,5 mm, vorzugsweise zwischen 2 mm und 2,2 mm aufweist. Die Spule kann einen Magnetkern aufweisen, dessen Höhe im Wesentlichen der Dicke der Spule entspricht.

Die Spule kann ein Spulen-Array umfassen, welches eine Anzahl von nebeneinander und sich teilweise überlappenden Spulen aufweist.

Vorteilhaft ist es, wenn die Oberseite des Gehäuses ein stabiles, nicht-metallisches Material aufweist. Die Spule kann innerhalb des Gehäuses angeordnet und der Oberseite des Gehäuses zugewandt sein.

Die Oberseite des Gehäuses kann ein stabiles - auch metallisches - Material aufweisen, wobei die Spule dann vorteilhafterweise außerhalb und an der Oberseite des Gehäuses angeordnet sein kann.

Die außerhalb und an der Oberseite des Gehäuses angeordnete Spule kann in ein stabiles Material eingelassen sein.

Das stabile Material kann ein Kunststoff, vorzugsweise ein Duroplast, ein Epoxidharz oder ein glasfaserverstärkter Kunststoff sein.

An der Möbelplatte kann ein USB-Anschluss (Universal Serial Bus) vorgesehen ist, der mit der elektronischen Komponente gekoppelt ist, und über den ein Datenaustausch zwischen einer Datenverarbeitungseinrichtung und der elektronischen Komponente abgewickelt werden kann.

Das Gehäuse kann mit Verbindungsmittel, vorzugsweise Schrauben oder Klebemittel, besonders bevorzugt mit Spreizklemmen in der Aussparung mit der Möbelplatte verbunden sein. Mit Spreizklemmen ist ein besonders einfaches und stabiles Verspreizen des Gehäuses in der Aussparung möglich.

Die elektronische Komponente kann angepasst sein, die Übertragung der elektrischen Energie an das elektrische Gerät dann zu starten, wenn die elektronische Komponente ein elektrisches Gerät, vorzugsweise ein autorisiertes elektrisches Gerät detektiert hat.

Das Gehäuse kann beispielsweise mit einem Glasdeckel oder einem Kunststoffdeckel versehen sein, wobei der Deckel des Gehäuses flächenbündig mit der Oberseite der Möbelplatte abschließt.

An der Rückseite der Spulen kann eine Abschirmung, etwa ein Aluminiumblech vorgesehen sein.

### Kurzbeschreibung der Figuren

Einzelheiten und Merkmale der Erfindung sowie konkrete Ausgestaltungen der Erfindung ergeben sich aus der nachfolgenden Beschreibung in Verbindung mit den Zeichen. Es zeigt:
- Fig. 1: eine perspektivische Ansicht einer erfindungsgemäßen Möbelplatte mit einer Aussparung an der Unterseite der Möbelplatte und ein auf der Möbelplatte abgelegtes elektrisches Gerät;
- Fig. 2: einen Querschnitt der in Fig. 1 gezeigten Möbelplatte entlang der Schnittachse A-A;
- Fig. 3: eine erste Ausgestaltung eines in die Möbelplatte integrierten Gehäuses, in welchem die elektronischen Komponenten einer Ladeeinrichtung angeordnet sind;
- Fig. 4: eine alternative Ausgestaltung eines in eine Möbelplatte integrierten Gehäuses, wobei die elektronischen Komponenten der Ladeeinrichtung zumindest teilweise außerhalb des Gehäuses angeordnet sind;
- Fig. 5: eine erfindungsgemäße Möbelplatte, wobei das Gehäuse für die elektronischen Komponenten eines Ladegerätes lediglich teilweise in die Möbelplatte integriert ist;
- Fig. 6a: eine Ausgestaltung einer Spule für eine erfindungsgemäße elektronische Komponente zur Integration in eine Möbelplatte;
- Fig. 6b: eine Anzahl von nebeneinander und übereinander angeordneten Spulen;
- Fig. 7: ein in eine Möbelplatte erfindungsgemäß integriertes Gehäuse, wobei zumindest die Spulen der Ladeeinrichtung außerhalb des Gehäuses angeordnet sind und in ein stabiles Material eingebettet sind;
- Fig. 8: ein in eine Möbelplatte erfindungsgemäß integriertes Gehäuse, wobei die Oberseite des Gehäuses an der Oberseite der Möbelplatte sichtbar ist;
- Fig. 9: ein Beispiel einer konkreten Ausgestaltung einer erfindungsgemäßen Integration von elektronischen Komponenten in eine Möbelplatte;
- Fig. 10: zwei Führungsschienen mit einem darin angeordneten Gehäuse;
- Fig. 11: ein Beispiel einer Anordnung von Führungsschienen an der Unterseite einer Möbelplatte;
- Fig. 12a: eine besonders vorteilhafte Ausgestaltung eines erfindungsgemäßen Gehäuses in einer perspektivischen Ansicht von schräg unten;
- Fig. 12b: das in Fig. 12a gezeigte Gehäuse in einer Seitenansicht;
- Fig. 13a: einen Ausschnitt einer Möbelplatte mit einem in einer Aussparung angeordneten Gehäuse nach Fig. 12a und Fig. 12b; und
- Fig. 13b: eine Ansicht von unten des in Figur 13a gezeigten Ausschnittes sowie einen Schnitt entlang der Schnittachse A-A.

### Detaillierte Beschreibung der Erfindung

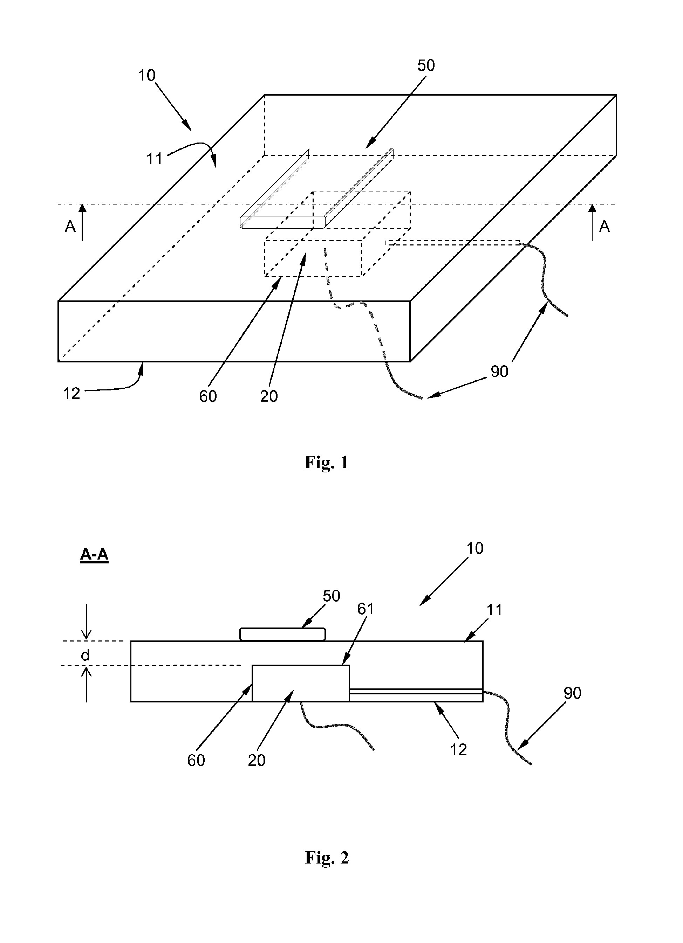

**Fig. 1** zeigt eine perspektivische Ansicht einer erfindungsgemäßen Möbelplatte 10 mit einer Oberseite 11 und einer Unterseite 12. An der Oberseite 11 der Möbelplatte ist ein elektrisches Gerät 50, beispielsweise ein Smartphone abgelegt.

An der Unterseite 12 der Möbelplatte ist eine Aussparung 20 vorgesehen, in der elektronische Komponenten einer Ladeeinheit angeordnet werden. Mit der Ladeeinheit wird elektrische Energie drahtlos an das an der Oberseite der Möbelplatte abgelegte elektrische Gerät 50 übertragen werden, um etwa einen Akkumulator des elektrischen Gerätes aufzuladen. Die elektronischen Komponenten der Ladeeinheit können in einem Gehäuse 60 angeordnet sein, um die Integration der elektronischen Komponenten in die Möbelplatte 10 zu vereinfachen, weil die Integration durch einfaches Einsetzen des Gehäuses in die Aussparung 20 erfolgen kann. Das Gehäuse 60 ist zudem vorgesehen, die Stabilität der Möbelplatte im Bereich der Aussparung 20 zu erhöhen.

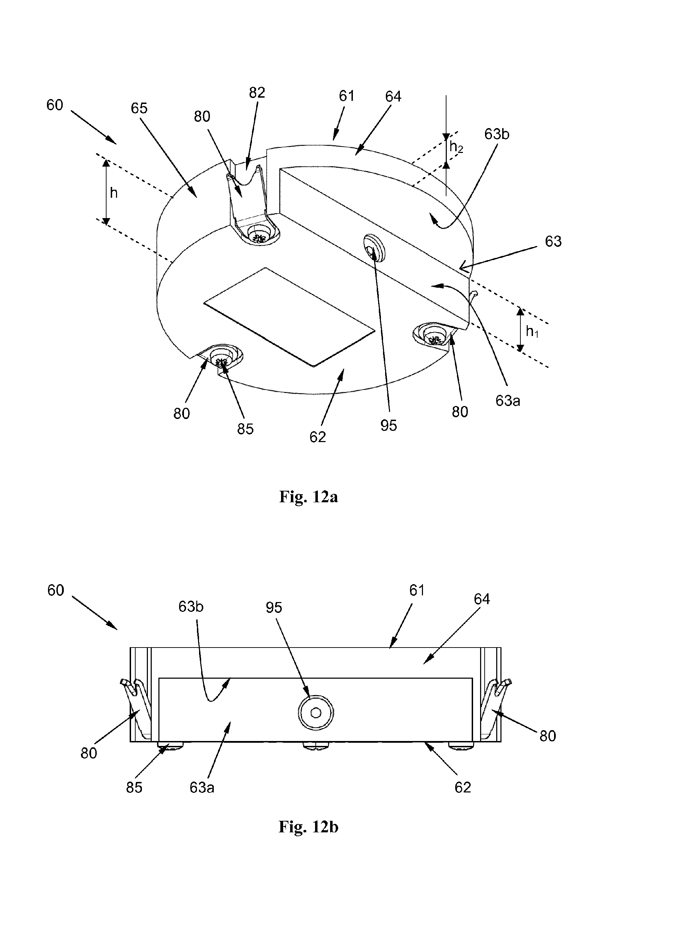

Die Aussparung 20 bzw. das Gehäuse 60 sind hier im Wesentlichen quaderförmig ausgestaltet. Alternativ können die Aussparungen 20 und das Gehäuse 60 beispielsweise auch zylinderförmig, sechseckig, achteckig oder dergleichen ausgestaltet sein. Eine besonders vorteilhafte Ausgestaltung eines zylinderförmigen Gehäuses bzw. eines Gehäuses mit einem zylinderförmigen Umriss wird mit Bezug auf Fig. 12a bis Fig. 13b näher beschrieben..

An der Unterseite des Gehäuses 60 ist ein Daten- und/oder Stromkabel vorgesehen bzw. angeschlossen, um die in dem Gehäuse 60 angeordneten elektronischen Komponenten mit Energie zu versorgen bzw. einen Datenaustausch zu ermöglichen. Alternativ kann das Daten- und/oder Stromkabel 90 auch über einen Kabelkanal bzw. Kabelschacht von einer Seitenwandung der Möbelplatte zu dem Gehäuse 60 geführt werden.

Bei der in Fig. 1 gezeigten Ausgestaltung einer erfindungsgemäßen Möbelplatte ist das Gehäuse an der Oberseite 11 der Möbelplatte 10 nicht sichtbar, sodass die Oberseite 11 der Möbelplatte optisch keinen Unterschied zur Oberseite einer herkömmlichen Möbelplatte aufweist. Dies hat den Vorteil, dass, sofern kein elektrisches Gerät 50 zum Zwecke des Aufladens oberhalb der in dem Gehäuse 60 angeordneten elektronischen Komponenten auf der Oberseite 11 der Möbelplatte 10 abgelegt ist, die gesamte Oberseite 11 der Möbelplatte für andere Zwecke genutzt werden kann, ohne das Steckdosen oder andere Steckereinrichtungen die Nutzung der Möbelplatte beeinträchtigen.

Die Möbelplatte kann aus Holz, einem stabilen Kunststoff, etwa Plexiglas, aus Glas, aus Keramik, aus Stein oder dergleichen gefertigt sein. Wichtig ist jedoch, dass die Möbelplatte 10 im Bereich des Gehäuses 60 möglichst wenig, vorzugsweise kein metallisches Material aufweist, um die drahtlose Energieübertragung zwischen der Ladeeinheit in dem Gehäuse 60 und dem elektronischen Gerät 50 nicht zu beeinträchtigen.

Vorteilhaft ist es, an der Oberseite 11 der Möbelplatte 10 eine Markierung vorzusehen, welche die Position der in der Möbelplatte 10 integrierten elektronischen Komponente 30 bzw. des in der Möbelplatte integrierten Gehäuses 60 anzeigt. Die Markierung kann beispielsweise mit einer Klebefolie oder dergleichen realisiert werden. Zu Markierung kann jede Technik verwendet werden, welche geeignet ist, die Position der elektronischen Komponente 30 bzw. Gehäuses 60 optisch sichtbar zu machen.

Die Möbelplatte 10 kann eine Tischplatte, eine Schreibtischplatte, eine Tischplatte für einen Konferenztisch, eine Küchenarbeitsplatte oder ein Regalboden, etwa für ein Bücherregal sein. Die Möbelplatte 10 kann aber auch eine obere Abdeckplatte eines Schrankes oder eines Rollcontainers sein. Die Möbelplatte kann aber auch als Ablagefläche in einem Fahrzeuginnenraum genutzt werden. Beispielsweise kann die Möbelplatte als Armauflage ausgestaltet sein, oder in das Armaturenbrett integriert sein. Beispielsweise kann die in die Armauflage integrierte elektronische Komponente genutzt werden, ein dort abgelegtes Gerät, etwa ein Smartphone, aufzuladen oder den Zündmechanismus des Fahrzeuges freizugeben, nachdem sich das Smartphone erfolgreich gegenüber der elektronischen Komponente authentifiziert hat.

In einer besonderen Ausgestaltung der Erfindung kann die Möbelplatte 10 auch vorgesehen sein in eine Wand integriert zu werden, etwa um die in dem Gehäuse angeordneten elektronischen Komponenten als elektrischen Türöffner zu nutzen. Mit Hilfe eines Smartphones, welches an die Oberfläche 11 angelegt werden kann, kann die in dem Gehäuse 60 angeordnete elektronische Komponente eine Zutrittsberechtigung verifizieren, indem zwischen der elektronischen Komponente und dem Smartphone ein Datenaustausch stattfindet, und den Zutritt freigeben.

**Fig. 2** zeigt eine Schnittansicht entlang der Schnittachse A-A der in Fig. 1 gezeigten Möbelplatte 10.

Deutlich erkennbar ist hier die Tiefe der Aussparung 20 an der Unterseite 12 der Möbelplatte 10, welche geringer ist, als die Dicke der Möbelplatte selbst. In dem Bereich der Aussparung 20 weist die Möbelplatte 10 eine Dicke d auf.

Erfindungsgemäß werden in der Aussparung 20 bzw. in dem Gehäuse 60 elektronische Komponenten angeordnet, welche eine Energieübertragung zu dem elektrischen Gerät 50 auf induktiver Basis abwickeln. Um eine reibungslose Energieübertragung zu gewährleisten sollte die Dicke d einen bestimmten Maximalwert nicht überschreiten. Vorteilhaft ist es, wenn die Dicke d einen Wert zwischen 1 mm und 10 mm beträgt.

Versuche haben gezeigt, dass eine Dicke d zwischen 2 mm und 5 mm besonders vorteilhaft ist. Bei dieser Dicke ist einerseits eine gute Stabilität der Möbelplatte und anderseits eine reibungslose Energieübertragung gewährleistet.

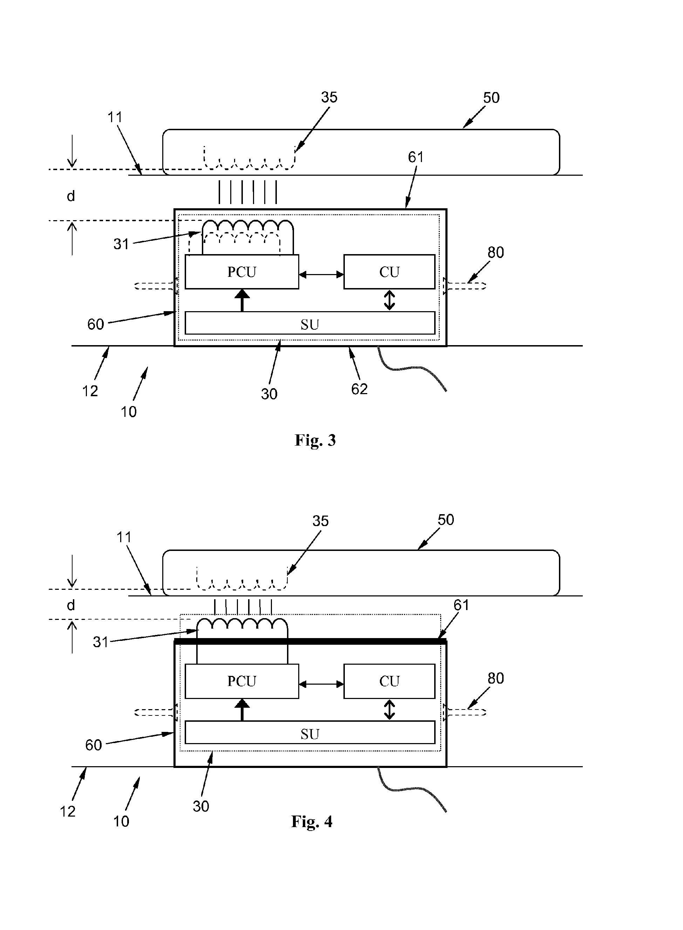

Gezeigt ist in Fig. 2 die Dicke d zwischen der Oberseite 11 der Möbelplatte und der Oberseite bzw. der oberen Abdeckung 61 des Gehäuses 60. In einer konkreten Realisierung der erfindungsgemäßen Möbelplatte ist die Dicke d der Möbelplatte im Bereich des Gehäuses 60 so zu wählen, dass d dem Abstand zwischen einer Primärspule der elektronischen Komponente in dem Gehäuse 60 und einer Sekundärspule in dem elektrischen Gerät 50 entspricht, wie etwa mit Bezug auf Fig. 3 oder Fig. 4 gezeigt.

**Fig. 3** zeigt einen Schnitt durch eine erfindungsgemäße Möbelplatte, an dessen Oberseite 11 ein elektrisches Gerät 50, etwa ein Smartphone, abgelegt ist.

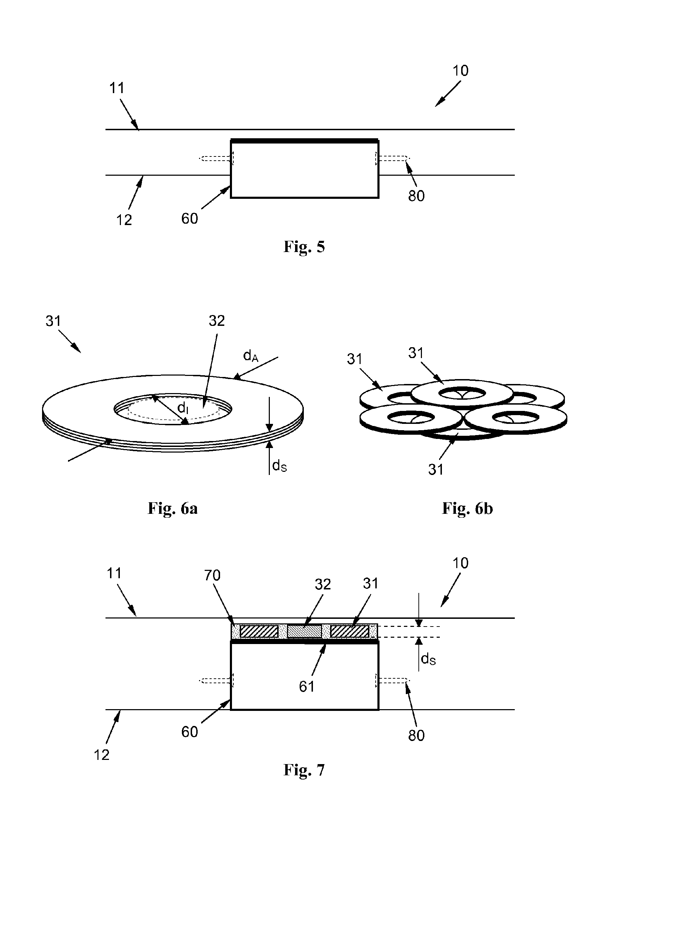

Das elektrische Gerät 50 weist eine Sekundärspule 35 auf, über welche die Energieübertragung auf induktiver Basis abgewickelt wird. An der Unterseite 12 der Möbelplatte 10 ist in einer Aussparung ein Gehäuse 60 integriert, welches hier flächenbündig mit der Unterseite 12 der Möbelplatte 10 abschließt. In dem Gehäuse 60 sind die elektronischen Komponenten 30 einer induktiven Ladeeinheit angeordnet. Die elektronischen Komponenten können bspw. eine Control Unit CU, eine Power Conversion Unit PCU und eine System Unit SU umfassen, welche in geeigneter Weise miteinander gekoppelt sind. An der Power Conversion Unit PCU ist eine Primärspule 31 angeordnet bzw. angeschlossen, welche mit der Sekundärspule 35 des elektrischen Gerätes 50 derart zusammenwirkt, dass über die Primärspule 31 und die Sekundärspule 35 die Energieübertragung abgewickelt werden kann. In einer besonderen Ausgestaltung der Erfindung können auch mehrere Primärspulen 31 vorgesehen sein. Eine konkrete Anordnung mehrerer Primärspulen 31 wird mit Bezug auf Fig. 6b näher erläutert.

Das Gehäuse 60 kann beispielsweise mit Befestigungsschrauben 80 mit der Möbelplatte 10 verbunden werden. Die Unterseite des Gehäuses 60 kann als Deckel ausgestaltet sein, um jederzeit Zugang zu den elektronischen Komponenten 30 zu erhalten.

In Fig. 3 ist nunmehr der Abstand d zwischen der Primärspule 31 und der Sekundärspule 35 gezeigt, welcher vorzugsweise zwischen 1 mm und 5 mm beträgt. Bei entsprechender Leistung der Ladeeinheit 30 kann der Abstand d auch größer als 5 mm gewählt werden.

Erfindungsgemäß weißt die Oberseite bzw. die obere Abdeckung 61 des Gehäuses 60 ein stabiles Material auf, um die Stabilität der Möbelplatte im Bereich der Aussparung zu erhöhen. Dies ist insbesondere dann vorteilhaft, wenn die Möbelplatte 10 aus einem weniger stabilen Material, etwa Holz gefertigt ist und der vorgegebene Abstand d zwischen den beiden Spulen dazu führt, dass der Abstand zwischen der Oberseite 11 der Möbelplatte und der Oberseite 61 des Gehäuses besonders klein ist. Die stabile Oberseite bzw. obere Abdeckung 61 des Gehäuses 60 verhindert, dass die Möbelplatte im Bereich der Aussparung durchbrechen kann. Um die Energieübertragung zwischen den beiden Spulen nicht zu beeinträchtigen ist die Oberseite bzw. obere Abdeckung 61 des Gehäuses 60 aus einem nichtmetallischen Material gefertigt. Die Abdeckung 61 des Gehäuses 60 kann etwa aus Plexiglas gefertigt sein. Die Seitenwandungen und/oder die Unterseite 62 des Gehäuses 60 können hingegen aus einem metallischem Material, etwa Aluminium oder Stahl gefertigt sein.

**Fig. 4** zeigt eine alternative Ausgestaltung eines in eine Möbelplatte integrierten Gehäuses 60 mit darin angeordneten elektronischen Komponenten 30 einer Ladeeinheit.

Im Unterschied zu der in Fig. 3 gezeigten Ausführungsform ist die Primärspule 31 1 außerhalb des Gehäuses 60 und an der Abdeckung 61 des Gehäuses 60 angeordnet, sodass bei Einhaltung des Maximalabstandes d zwischen der Primärspule 31 und der Sekundärspule 35 der Abstand zwischen der Oberseite 11 der Möbelplatte 10 und der oberen Abdeckung 61 des Gehäuses 60 vergrößert werden kann, was eine stärkere Ausgestaltung der Möbelplatte im Bereich der Aussparung 20 ermöglicht.

Bei der in Fig. 4 gezeigten Ausgestaltung einer erfindungsgemäßen Möbelplatte kann auch die Oberseite bzw. die obere Abdeckung 61 des Gehäuses 60 aus einem metallischen Material gefertigt sein, weil in diesem Fall die obere Abdeckung 61 des Gehäuses 60 nicht zwischen der Sekundärspule 35 und der Primärspule 31 angeordnet ist. Dadurch kann ein besonders stabiles Gehäuse 60 bereitgestellt werden, welches besonders positiv zur Stabilität der Möbelplatte im Bereich der Aussparung 20 beiträgt. Letztlich muss bei dieser Ausgestaltung der erfindungsgemäßen Möbelplatte in der Aussparung 20 lediglich eine weitere Aussparung vorgesehen werden, in welcher die Primärspule 31 Platz findet. Weil die Primärspule nur eine sehr geringe Dicke aufweist (vgl. Fig. 6a) weist diese zusätzliche Aussparung ebenfalls nur eine sehr geringe Tiefe auf, was die Stabilität der Möbelplatte im Bereich der Aussparung 20 nur unwesentlich beeinträchtigt. Die obere Abdeckung 61 des Gehäuses 60 und die außerhalb des Gehäuses angeordnete Primärspule 31 liegen vorzugsweise formschlüssig an der Unterseite der Möbelplatte (d.h. in der Aussparung 20) an.

**Fig. 5** zeigt eine weitere Ausgestaltung einer erfindungsgemäßen Möbelplatte 10, bei der in der an der Unterseite vorgesehenen Aussparung 20 ein Gehäuse 60 mit hier nicht gezeigten elektronischen Komponenten angeordnet ist, wobei das Gehäuse 60 teilweise an der Unterseite 12 der Möbelplatte 10 hervorsteht. Diese Ausführungsform der erfindungsgemäßen Möbelplatte wird vorzugsweise dann gewählt, wenn die Arbeitsplatte an sich eine besonders geringe Dicke aufweist, welche nicht ausreicht das gesamte Gehäuse aufzunehmen. Vorteilhafterweise wird die Höhe des Gehäuses 60 jedoch so gewählt, dass das Gehäuse an der Unterseite mit der Unterseite 12 der Möbelplatte flächenbündig abschließt.

**Fig. 6a** zeigt eine vorteilhafte Ausgestaltung einer Primärspule 31. Die Primärspule 31 ist hier als drahtgewickelte Spule ausgestaltet, welche eine im Wesentlichen ringförmige Form aufweist und einen Außendurchmesser d_{A} von etwa 30 mm bis 60 mm, einen Innendurchmesser d_{I} von etwa 15 mm bis 25 mm und eine Dicke d_{S} von etwa 1,5 mm bis 2,5 mm aufweist. Vorteilhaft ist es, wenn der Außendurchmesser d_{A} zwischen 40 mm und 45 mm, der Innendurchmesser d_{I} zwischen 19 mm und 21 mm und die Dicke d_{S} zwischen 2 mm und 2,2 mm beträgt. Bei der in Fig. 4 gezeigten Ausgestaltung der erfindungsgemäßen Möbelplatte muss lediglich eine zusätzliche zylinderförmige Aussparung für die Primarspule 31 vorgesehen werden, welche eine Tiefe von etwa 1,5 mm bis 2,5 mm aufweist und einen Durchmesser aufweist, welcher im Wesentlichen dem Außendurchmesser d_{A} der Primärspule entspricht.

Die Primärspule 31 weißt einen Ferrit- bzw. Magnetkern 32 auf, dessen Höhe im Wesentlichen der Dicke d_{S} der Primärspule 31 entspricht.

**Fig. 6b** zeigt ein Spulen-Array, welches eine Anzahl von nebeneinander angeordneten und sich teilweise überlappenden Spulen 31 aufweist. Dadurch kann der wirksame Bereich für eine Energieübertragung zwischen den Primärspulen 31 und einer Sekundärspule 35 eines elektrischen Gerätes vergrößert werden. Zudem ist es möglich, die elektronischen Komponenten so auszugestalten, dass diese detektierten können, gegenüber welcher Primarspule 31 sich die Sekundärspule 35 aktuell befindet. Das Spulen-Array kann entweder innerhalb des Gehäuses 60 angeordnet werden, wie bspw. mit Bezug auf Fig. 3 gezeigt, oder außerhalb des Gehäuses 60 angeordnet werden, wie bspw. mit Bezug auf Fig. 4 gezeigt.

Die in Fig. 6a gezeigte Spule bzw. das in Fig. 6b gezeigt Spulen-Array kann in einer Ausgestaltung der Erfindung in einem quaderförmigen oder zylinderförmigen Block aus Epoxidharz eingelassen sein, wobei nur die Anschlüsse der Spule bzw. des Spulen-Arrays nach außen geführt sind. Der so gebildete stabile Spulenblock kann dann unabhängig von dem Gehäuse 60, in dem die übrigen elektronischen Komponenten der Ladeeinheit angeordnet sind, in die Aussparung 20 eingebracht werden. Nach dem Einbringen des Spulenblockes in die Aussparung 20 können dann die Anschlüsse der Spule bzw. des Spulen-Arrays mit entsprechenden Anschlüssen des Gehäuses verbunden werden und das Gehäuse in die Aussparung 20 eingesetzt werden.

Dies hat den Vorteil, dass eine erfindungsgemäße Möbelplatte hergestellt werden kann, in die ein Spulenblock integriert ist, ohne auch die übrigen elektronischen Komponenten der Ladeeinheit integrieren zu müssen. Der Spulenblock kann mittels geeigneter Befestigungsmittel in der Aussparung befestigt werden. Die übrigen elektronischen Komponenten der Ladeeinheit können dann vom den Nutzer der Möbelplatte nachgerüstet werden, um etwa eine auf ein bestimmtes elektrisches Gerät 50 angepasste Ladeeinheit zu integrieren.

In einer alternativen Ausgestaltung der Erfindung kann die Spule auch an der Unterseite der Möbelplatte (d.h. in der Aussparung) aufgedruckt sein, etwa mit einem elektrischen leitfähigen Lack, z.B. Silberlack.

**Fig. 7** zeigt einen Schnitt durch eine erfindungsgemäße Möbelplatte, wobei wie in Fig. 4 gezeigt, die Primärspule 31 und der Ferrit- bzw. Magnetkern 32 außerhalb des Gehäuses 60 und an der Oberseite 61 des Gehäuses 60 angeordnet sind.

Die Primärspule 31 und der Ferrit- bzw. Magnetkern 32 sind von einem stabilen Material 70 umgeben bzw. in ein stabiles Material 70 eingelassen. Das stabile Material 70 kann bspw. ein Kunststoff oder ein glasfaserverstärkter Kunststoff sein. Als vorteilhaft für das stabile Material 70 hat sich Duraplast erwiesen. Alternativ können die Primärspule 31 und der Magnetkern 32 auch in Epoxidharz eingelassen werden. Das die Spule und den Magnetkern umgebende Material bildet einen quader- oder zylinderförmigen Block (Spulenblock) mit einer im Wesentlichen flachen Oberseite und Unterseite.

Diese Ausgestaltung hat den Vorteil, dass die Primärspule 31 und der Magnetkern 32 einerseits vor äußeren Einflüssen geschützt sind. Andererseits wird durch das stabile Material 70 ein die Primärspule 31 und den Magnetkern 32 umgebender stabiler und fester Mantel gebildet. Die Oberseite dieses stabilen Mantels liegt formschlüssig an der Unterseite des dünnen Bereichs der Tischplatte an. Die Unterseite dieses stabilen Mantels liegt formschlüssig an der Abdeckung 61 des Gehäuses 60 an. Der Spulenblock trägt damit positiv zu Stabilität der Tischplatte im Bereich der Aussparung 20 bei.

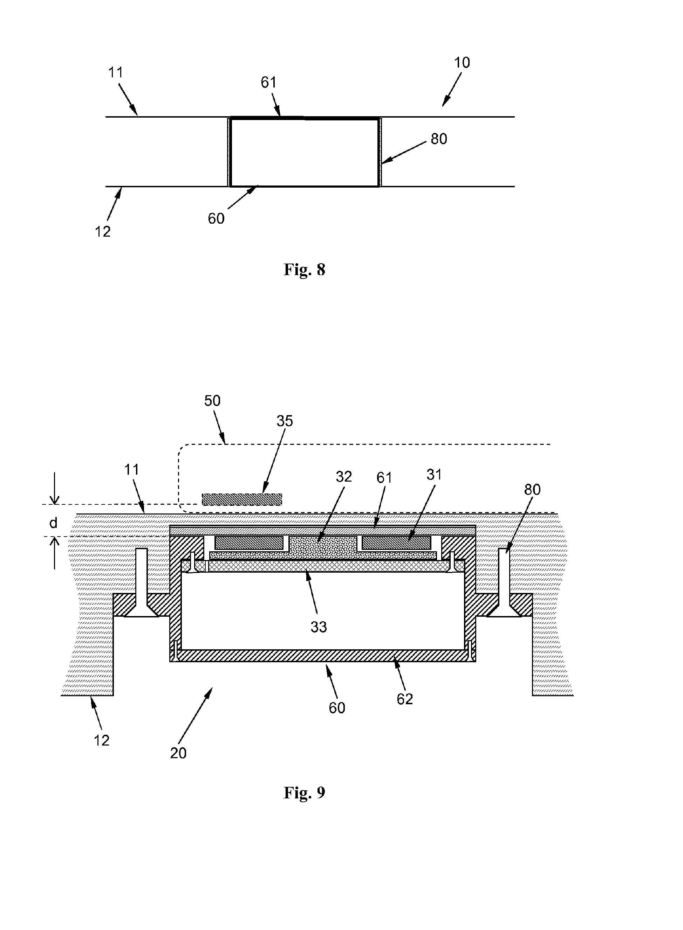

**Fig. 8** zeigt eine alternative Ausgestaltung einer erfindungsgemäßen Möbelplatte 10, wobei das Gehäuse 60 an der Oberseite 11 der Möbelplatte sichtbar ist. Das Gehäuse 60 weist hier im Wesentlichen die gleiche Höhe auf wie die Dicke der Möbelplatte 10. Die Oberseite bzw. die obere Abdeckung 61 des Gehäuses 60 ist flächenbündig zur Oberseite 11 der Möbelplatte angeordnet. Die obere Abdeckung 61 des Gehäuses 60 kann aus einem transparenten, semi-transparenten oder nicht-transparenten und nicht-metallischem Material sein.

In der in Fig. 8 gezeigten Ausgestaltung ist das Gehäuse 60 nicht mit Befestigungsschrauben an der Platte befestigt, sondern mittels eines Klebstoffes 80. Die Verwendung von Klebstoff 80 ist dann vorteilhaft, wenn sich das Material der Möbelplatte für die Herstellung von Bohrlöchern nicht eignet.

**Fig. 9** zeigt eine konkrete Realisierung einer erfindungsgemäßen Möbelplatte in einer Schnittansicht, wobei das Gehäuse 60 im Wesentlichen zylinderförmig ausgestaltet ist.

Die Aussparung 20 ist ebenfalls im Wesentlichen zylinderförmig ausgestaltet und weist hier ungefähr auf etwa der halben Höhe eine umlaufende Stufe auf, an der Vorsprünge des Gehäuses 60 mittels Befestigungsschrauben 80 befestigt werden. Die Vorsprünge können als umlaufender Ring ausgestaltet sein. Die untere Abdeckung 62 des Gehäuses ist hier mittels Befestigungsschrauben an dem zylinderförmigen Gehäuseteil befestigt.

Im oberen Bereich des Gehäuses 60 sind die Primärspule 31 und der Magnetkern 32 angeordnet. Der Magnetkern 32 ist hier so ausgestaltet, dass er in die Primärspule 31 hineinragt und an der Unterseite über die Primärspule 31 hinausragt. Unterhalb der Primärspule 31 bzw. unterhalb des Magnetkerns 32 ist eine Schirmplatte 33 angeordnet und mittels Befestigungsschrauben an dem Gehäuse 60 befestigt. Die Schirmplatte 33 dient zur Abschirmung des elektromagnetischen Feldes gegen die unterhalb der Schirmplatte 33 angeordneten, hier nicht gezeigten, elektrischen Komponenten der Ladeeinrichtung. Die Schrimplatte 33 kann beispielsweise Aluminium aufweisen. Ferner weist die Schirmplatte 33 an einem Randbereichen einen Durchbruch, etwa in Form eines Langloches auf, durch welchen die elektrischen Anschlüsse für die Spule 31 durchgeführt werden.

Gemäß der in Fig. 9 gezeigten Ausführungsform ist an der Oberseite des Gehäuses 60 eine Abdeckung 61 vorgesehen, welche ein besonders stabiles Material aufweist, um die Möbelplatte im Bereich der Spule bzw. des Magnetkerns zu stabilisieren. Die Abdeckung 31 weist ein nichtmetallisches Material auf, um die induktive Energieübertragung zwischen der Primärspule 31 und einer Sekundärspule 35 eines elektrischen Gerätes 50 nicht zu beeinträchtigen. Auf die Abdeckung 61 kann auch verzichtet werden, sodass die Primärspule 31 und der Magnetkern 32 näher an die Oberseite 11 der Möbelplatte 10 heranrücken können. Bei Verzicht einer oberen Abdeckung 61 ist es vorteilhaft, die Primärspule 31 und den Magnetkern 32 in ein stabiles Material, etwa Epoxidharz einzulassen, bzw. die Hohlräume damit aufzufüllen.

Anstellte der in Fig. 9 gezeigten Befestigungsschrauben 80 können auch sogenannte Clips-Verschlüsse vorgesehen werden, welche ein besonders einfaches und schnelles Lösen des Gehäuses 60 von der Platte ermöglichen. Dadurch wird ein einfaches Austauschen des Gehäuses samt der elektronischen Komponenten oder die Entnahme des Gehäuses, etwa zum Zwecke einer Reparatur vereinfacht.

Gezeigt ist in Fig. 9 ebenfalls der Abstand d zwischen der Primärspule 31 und der Sekundärspule 35. Versuche haben ergeben, dass insbesondere bei Verwendung einer stabilen Abdeckung 61 die Dicke der Möbelplatte im Bereich der Abdeckung 61 lediglich 1 mm betragen kann, ohne dass die Möbelplatte in diesem Bereich beschädigt wird. Die zylinderförmige Gehäusewandung kann aus einem Metall gefertigt sein, sodass die obere Abdeckung 61 umlaufend auf einem stabilen Gehäuse aufliegt.

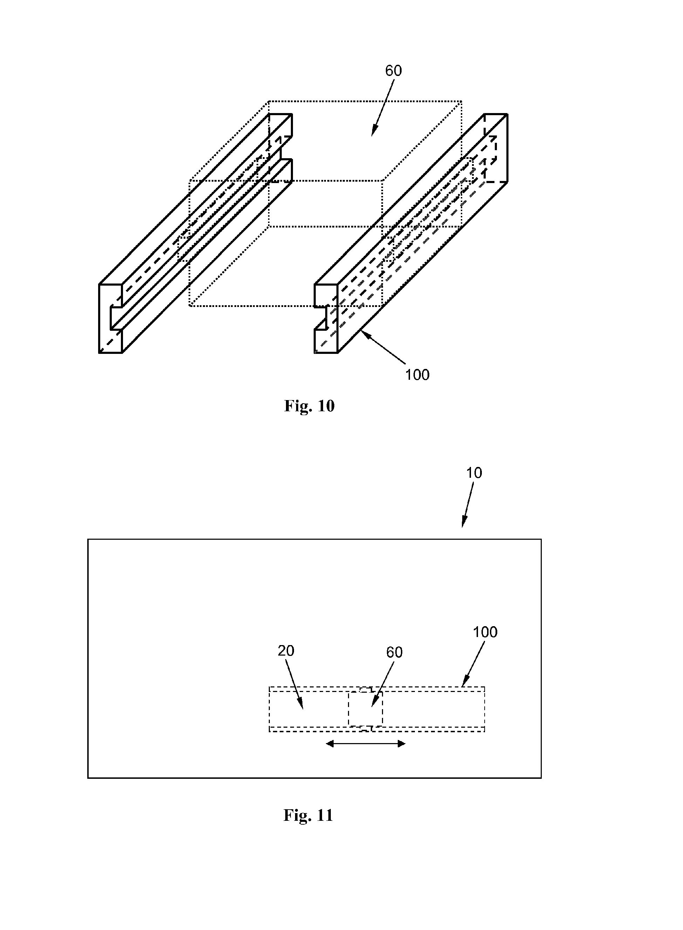

Fig. 10 zeigt eine erfindungsgemäße vorteilhafte Weiterbildung eines Gehäuses 60 zur Integration in einer erfindungsgemäßen Möbelplatte. Bereitgestellt werden hier zwei Führungsschienen 100 zwischen denen das Gehäuse 60 relativ zu den Führungsschienen bewegbar angeordnet ist. Die Führungsschienen sind aus einem stabilen Material gefertigt, wobei die Längsführungen der Schienen so ausgestaltet sind, dass ein Bewegen des Gehäuses 60 entlang der Führungsschienen ohne großen Kraftaufwand möglich ist.

**Fig. 11** zeigt eine Draufsicht einer erfindungsgemäßen Möbelplatte 10, wobei an der Unterseite der Möbelplatte 10 eine längliche Aussparung 20 vorgesehen ist. In der länglichen Aussparung 20 sind an den Seitenwandung zwei Führungsschienen 100, wie mit Bezug auf Fig. 10 gezeigt, angeordnet, entlang derer das Gehäuse 60 bewegt werden kann, dadurch wird es möglich, den aktiven Bereich, etwa für ein Aufladen eines elektrischen Gerätes durch Veränderung der Position des Gehäuses 60 zu ändern.

Anstellte der in Fig. 10 gezeigten Führungsschienen können die Längsführungen auch direkt in den Seitenwandungen der Aussparung 20 hineingefräst werden. Bei Vorsehen einer Aussparung 20 in der das Gehäuse 60 hin- und herbewegt werden kann, ist es vorteilhaft, an der Unterseite der Möbelplatte im Bereich der Aussparung eine Stabilisierungsplatte einzubringen, um die Möbelplatte in dem Bereich der Aussparung zu stabilisieren.

**Fig. 12a** zeigt eine besonders vorteilhafte Ausgestaltung eines erfindungsgemäßen Gehäuses in einer perspektivischen Ansicht von schräg unten und **Fig. 12b** zeigt das in Fig. 12a gezeigte Gehäuse in einer Seitenansicht.

Das Gehäuse 60 weist im Wesentlichen einen zylinderförmigen bzw. kreiszylinderförmigen Umriss auf. Das Gehäuse weist eine Oberseite 61 und eine Unterseite 62 sowie eine Seitenwandung 65 auf.

In einem unteren Bereich des Gehäuses weist das Gehäuse eine zylindersegmentförmige Ausnehmung 63 auf, wodurch an der Unterseite des Gehäuses eine Stufe ausgebildet wird bzw. wodurch die Seitenwandung 65 des Gehäuses stufenförmig ausgebildet wird. Durch die Aussparung 63 wird eine im Wesentlichen senkrecht zu einer Unterseite 62 des Gehäuses verlaufende erste Seitenwandung 63a und eine im Wesentlichen parallel zur Oberseite 61 des Gehäuses verlaufende zweite Seitenwandung 63b gebildet, die hier im Wesentlich senkrecht zueinander stehen. Die erste Seitenwandung 63a weist eine im Wesentlichen rechteckige Fläche auf. Die zweite Seitenwandung 63b weist eine im Wesentlichen kreissegmentförmige Fläche auf. Die erste Seitenwandung 63a kann auch leicht nach innen gewölbt sein.

Die Höhe h₁ der zylindersegmentförmigen Ausnehmung bzw. der ersten Seitenwandung 63a ist kleiner als die Gesamthöhe h des Gehäuses bzw. der Seitenwandung 65 des Gehäuses. Dadurch wird ein oberer Bereich bzw. Abschnitt 64 des Gehäuses 60 gebildet, der im Wesentlichen zylinderförmig ausgestaltet ist und der im Bereich der zylindersegmentförmigen Ausnehmung 63 durch eine kreissegmentförmige Wandung begrenzt wird. Der obere Abschnitt 64 weist eine Höhe h₂ auf, wobei die Summe der Höhen h₁ und h₂ der Gesamthöhe h des Gehäuses entspricht, d.h., h = h₁ + h₂.

Der Durchmesser des Gehäuses bzw. des oberen Abschnittes 64 und die Höhe h₂ des oberen Abschnittes 64 werden vorzugsweise so gewählt, dass in dem oberen Abschnitt 64 eine im Wesentlichen kreisförmige Spule einer induktiven Ladeeinheit angeordnet werden kann.

An der ersten Seitenwandung 63a ist eine Anschlussbuchse 95 zum Anschließen eines Strom und/oder Datenkabels vorgesehen. Der Anschlussstecker des Kabels wird daher im Wesentlichen parallel zur Oberseite 61 bzw. Unterseite 62 des Gehäuses herausgeführt, sodass ein unbeabsichtigtes Lösen des Kabels weitgehend verhindert wird.

Die Unterseite 62 und die Seitenwandung 65 des Gehäuses können aus jedem geeigneten stabilen Material gefertigt sein, beispielweise Aluminium. Die Oberseite 61 des Gehäuses ist ebenfalls aus einem stabilen Material gefertigt. Allerdings ist für die Oberseite 61 ein Material zu verwenden, dass die induktive Energieübertragung zu einem elektrischen Gerät nicht Wesentlich beeinflusst.

Zum einfachen Befestigen des Gehäuses 60 in einer zylinderförmigen Aussparung, etwa an der Unterseite einer Möbelplatte, sind hier drei Spreizklemmen 80 vorgesehen. In einer Ausgestaltung der Erfindung können auch lediglich zwei Spreizklemmen vorgesehen sein. Mit den Spreizklemmen 80 kann das Gehäuse auf einfache Weise in die zylinderförmige Aussparung verspreizt werden, ohne dass die Möbelplatte angebohrt werden muss.

An der Seitenwandung 65 des Gehäuses sind Aussparungen 82 vorgesehen, in denen die Spreizklemmen 82 Platz finden, wenn die Spreizklemmen nicht festgezogen sind, d.h., wenn das Gehäuse nicht verbaut ist.

Zum Verspreizen der Spreizklemmen sind Befestigungsschrauben 85 vorgesehen. Werden die Befestigungsschrauben 85 angezogen, dann spreizen sich die Spreizklemmen nach außen, sodass sie über die Oberfläche der Seitenwandung 65 herausragen, wie in Fig. 12b besonders gut erkennbar ist.

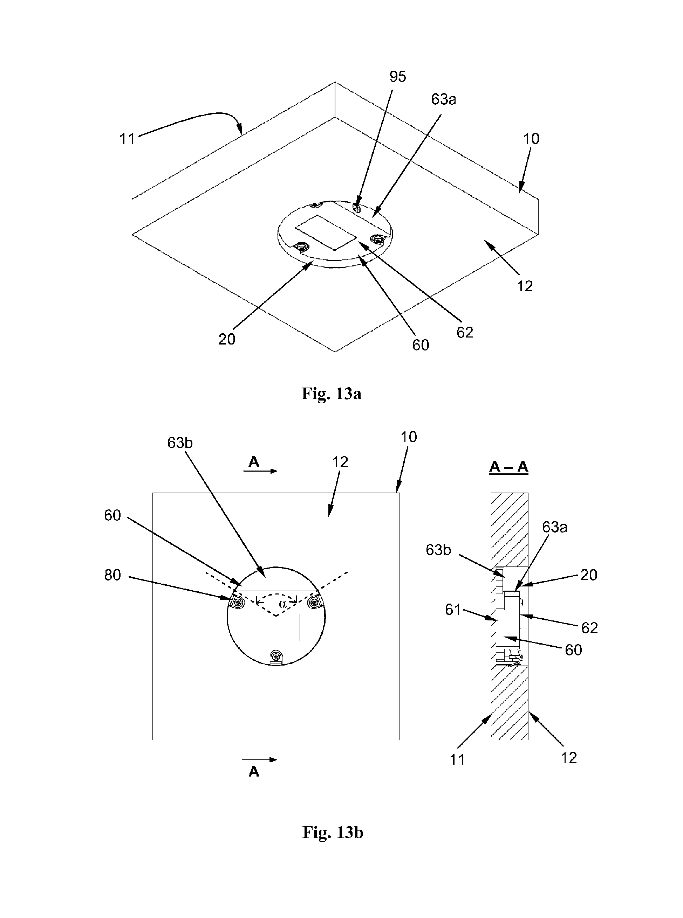

**Fig. 13a** zeigt einen Ausschnitt einer Möbelplatte 10 in einer perspektivischen Ansicht von schräge unten, in der ein in Fig. 12a gezeigtes Gehäuse integriert ist. Hierfür ist an der Unterseite 12 der Möbelplatte eine zylinderförmige Aussparung 20 vorgesehen. Die Aussparung kann etwa mit einem Forstnerbohrer oder, falls die Möbelplatte ein besonders hartes Material aufweist, mit einem Hohlkembohrer hergestellt werden. Weil das Gehäuse einen im Wesentlichen zylinderförmigen Umriss aufweist ist eine zylinderförmige Aussparung 20 vollkommen ausreichend, die zudem besonders einfach hergestellt werden kann.

Erkennbar ist hier, dass die zylindersegmentförmige Ausnehmung in dem Gehäuse von unten zugänglich ist, d.h., der obere, zylinderförmige Bereich 64 des Gehäuses, der die Spule aufnimmt, ist der Oberseite 11 der Möbelplatte zugewandt.

Nach dem Einsetzen des Gehäuses in die Aussparung 20 müssen nur mehr die 85 Befestigungsschrauben 85 angezogen werden, um das Gehäuse sicher in der Aussparung 20 zu verspreizen. Nun kann das Anschlusskabel an der Anschlussbuchse 95 angeschlossen werden.

**Fig. 13b** zeigt eine Ansicht einer Möbelplatte 10 von unten sowie einen Schnitt entlang der Schnittachse A-A.

In der Schnittansicht ist besonders gut erkennbar, dass das gesamte Gehäuse 60 in der zylinderförmigen Aussparung 20 Platz findet. Insbesondere ist gut erkennbar, dass durch die zylindersegmentförmige Ausnehmung 63 genügend Platz in der Aussparung 20 vorhanden ist, um einen Anschlussstecker eines Kabels unterzubringen.

In der Ansicht von unten ist der Mittelpunktswinkel α der kreissegmentförmigen Fläche bzw. der zweiten Seitenwandung 63b gezeigt. Besonders vorteilhaft ist es, wenn dieser Winkel zwischen 60° und 180°, vorzugsweise zwischen 90° und 150° beträgt, damit einerseits genügend Platz für den Anschlussstecker des Kabels und andererseits genügend Platz für die elektronischen Komponenten in dem Gehäuse zur Verfügung steht.

Vorstehend ist die erfindungsgemäße Möbelplatte bzw. das erfindungsgemäße Gehäuse insbesondere in Bezug auf elektronische Komponenten 30 beschrieben worden, welche ausgestaltet sind, eine drahtlose Energieübertragung zwischen den elektronischen Komponenten und einem an der Oberseite der Möbelplatte abgelegten elektrischen Gerätes zu bewerkstelligen.

Alternativ oder zusätzlich zur drahtlosen Energieübertragung auf induktiver Basis können die elektronischen Komponenten 30 auch ausgestaltet sein eine Datenübertragung, vorzugsweise bidirektionale Datenübertragung zwischen den elektronischen Komponenten 30 und dem elektrischen Gerät abzuwickeln. Die elektronischen Komponenten können hierzu etwa über eine USB-Schnittstelle mit einer Datenverarbeitungseinrichtung gekoppelt sein. Bei einer entsprechenden Anordnung etwa eines Mobiltelefons oder eines Smartphones relativ zu den elektronischen Komponenten 30 kann durch das Smartphone eine Authentifizierung an der Datenverarbeitungseinrichtung vorgenommen werden. Der Zugriff auf die Datenverarbeitungseinrichtung kann dann freigegeben werden, wenn die Authentifizierung erfolgreich war. Ferner kann die Datenübertragung dazu verwendet werden, um nur solche elektrischen Geräte mit Energie zu versorgen, welche sich gegenüber den elektronischen Komponenten 30 erfolgreich authentifizieren. Innerhalb von Unternehmen könnte damit gewährleistet werden, dass nur Firmengeräte aufgeladen werden können, während etwa private Mobiltelefone nicht aufgeladen werden können.

Zudem ist es möglich, über die elektronischen Komponenten 30 eine Datensynchronisation zwischen dem elektrischen Gerät 50 und der Datenverarbeitungseinrichtung durchzuführen. Hierfür muss etwa ein Smartphone lediglich auf einem dafür vorgesehenen Bereich eines Schreibtisches abgelegt werden, wobei die Authentifizierung des Smartphones gegenüber der Datenverarbeitungseinrichtung automatisch erfolgt, und die Datensynchronisation bei erfolgreicher Authentifizierung automatisch gestartet wird.

### Bezugszeichenliste:

- α: Mittelpunkswinkel
- A: Schnittachse
- CU: Control Unit der elektronischen Komponente
- d: Abstand zwischen Primärspule und Sekundärspule
- d_{A}: Außendurchmesser der Primärspule
- d_{I}: Innendurchmesser der Primärspule
- ds: Dicke der Primärspule
- h: Höhe des Gehäuses
- h₁: Höhe der zylindersegmentförmigen Ausnehmung bzw. der ersten Seitenwandung 63a
- h₂: Höhe des oberen zylinderförmigen Abschnittes des Gehäuses
- PCU: Power Conversion Unit der elektronischen Komponente
- SU: System Unit der elektronischen Komponente
- 10: Möbelplatte
- 11: Oberseite der Möbelplatte
- 12: Unterseite der Möbelplatte
- 20: Aussparung an der Unterseite der Möbelplatte
- 30: elektronische Komponente, z.B. Ladeeinheit
- 31: Spule(n) der elektronischen Komponente (Primärspulen)
- 32: Ferrit- bzw. Magnetkern der Spule
- 33: Schirmplatte (Shield)
- 35: Spule(n) im elektrischen Gerät (Sekundärspulen)
- 50: elektrisches Gerät, z.B. Smartphone, Tablett-PC, Handwerkzeuge, oder dergleichen
- 60: Gehäuse für die elektronische Komponente
- 61: Oberseite bzw. obere Abdeckung des Gehäuses bzw. Shield
- 62: Unterseite bzw. untere Abdeckung des Gehäuses
- 63: zylindersegmentförmige Ausnehmung an der Unterseite des Gehäuses
- 63a: erste Seitenwandung der zylindersegmentförmigen Ausnehmung (im Wesentlichen senkrecht zur Unterseite des Gehäuses)
- 63b: zweite Seitenwandung der zylindersegmentförmigen Ausnehmung (im Wesentlichen parallel zur Unterseite bzw. Oberseite des Gehäuses)
- 64: oberer, zylinderförmiger Abschnitt des Gehäuses
- 65: Seitenwandung des Gehäuses
- 70: stabiles Füllmaterial, z.B. Duroplast oder Epoxidharz
- 80: Befestigungsmittel, z.B. Schrauben, Klebstoff, Klemmen bzw. Spreizklemmen
- 82: Aussparung in der Seitenwandung des Gehäuses
- 85: Befestigungsschrauben für Spreizklemmen
- 90: Anschlusskabel für die elektronischen Komponente
- 95: Anschlussbuchse für Anschlusskabel (Netz- und/oder Datenkabel)
- 100: Führungsschienen

## Patentansprüche

1. Gehäuse (60) für eine elektronische Komponente (30), insbesondere Ladeeinheit, zur Anordnung in einer Aussparung (20) einer Möbelplatte (10), wobei das Gehäuse einen im Wesentlichen zylinderförmigen Umriss aufweist, wobei das Gehäuse eine Ausnehmung (63) in Form eines Zylindersegments aufweist, dessen Höhe (h₁) kleiner ist als die Höhe (h) des Gehäuses und wobei durch die Ausnehmung (63)
- eine im Wesentlichen senkrecht zu einer Unterseite (62) des Gehäuses verlaufende erste Seitenwandung (63a) und
- eine im Wesentlichen parallel zu einer Oberseite (61) des Gehäuses verlaufende zweite Seitenwandung (63b)
gebildet wird.

2. Gehäuse nach Anspruch 1, wobei die erste Seitenwandung (63a) und die zweite Seitenwandung (63b) im Wesentlichen senkrecht zueinander stehen und wobei die erste Seitenwandung (63a) mit der Unterseite (62) des Gehäuses abschließt.

3. Gehäuse nach einem der vorhergehenden Ansprüche, wobei die erste Seitenwandung (63a) eine im Wesentlichen rechteckige Fläche und die zweite Seitenwandung (63b) eine im Wesentlichen kreissegmentförmige Fläche aufweisen.

4. Gehäuse nach Anspruch 3, wobei der Mittelpunktswinkel (α) der kreissegmentförmigen Fläche der zweiten Seitenwandung (63b) zwischen 60° und 180°, vorzugsweise zwischen 90° und 150° beträgt.

5. Gehäuse nach einem der vorhergehenden Ansprüche, wobei an der ersten Seitenwandung (63a) eine Anschlussbuchse (95) vorgesehen ist, zum Koppeln der elektronischen Komponente (30) mit einem Anschlusskabel, insbesondere Netz- und/oder Datenkabel.

6. Gehäuse nach einem der vorhergehenden Ansprüche, wobei die Höhe (h₂) der ersten Seitenwandung (63a) mindestens die Hälfte der Höhe (h₁) des Gehäuses (60) beträgt.

7. Gehäuse nach einem der vorhergehenden Ansprüche, wobei randseitig am Gehäuse mindestens zwei, vorzugsweise mindestens drei Befestigungsmittel (80) angeordnet sind.

8. Gehäuse nach Anspruch 7, wobei die Befestigungsmittel (80) als Spreizklemmen ausgestaltet sind, die mit Schrauben an der Unterseite (62) des Gehäuses befestigt sind, zum Verspreizen des Gehäuses in der Aussparung (20) der Möbelplatte (10).

9. Gehäuse nach einem der vorhergehenden Ansprüche, wobei die Oberseite (61) des Gehäuses (60) ein stabiles, nicht-metallisches Material aufweist.

10. Möbelplatte (10) für ein Möbel, wobei die Möbelplatte (10) eine Oberseite (11) und eine Unterseite (12) aufweist und wobei in der Möbelplatte (10), vorzugsweise an der Unterseite (12) eine Aussparung (20), vorzugsweise eine zylinderförmige Aussparung vorgesehen ist, in der ein Gehäuse (60) nach einem der vorhergehenden Ansprüche angeordnet ist.

11. Möbelplatte nach Anspruch 10 wobei in dem Gehäuse (60) eine elektronische Komponente (30) angeordnet ist, die ausgestaltet ist, elektrische Energie drahtlos, vorzugsweise induktiv, an ein an der Oberseite (11) der Möbelplatte relativ zur elektronischen Komponente (30) anordenbares elektrisches Gerät (50) zu übertragen, insbesondere zum Aufladen eines Energiespeichers des elektrisches Gerätes.

12. Möbelplatte nach einem der Ansprüche 10 bis 11, wobei die elektronische Komponente (30) weiter ausgestaltet ist, Daten drahtlos an das elektrische Gerät (50) zu übertragen und/oder Daten von dem elektrischen Gerät (50) zu empfangen.

13. Möbelplatte nach einem der Ansprüche 10 bis 12, wobei die elektronische Komponente (30) zumindest eine Spule (31) aufweist, die vorzugsweise eine drahtgewickelte Spule umfasst, welche im Wesentlichen ringförmig ausgestaltet ist, einen Außendurchmesser (d_{A}) zwischen 30 mm und 60 mm, vorzugsweise zwischen 40 mm und 45 mm, einen Innendurchmesser zwischen 15 mm und 25 mm, vorzugsweise zwischen 19 mm und 21 mm, und eine Dicke (d_{S}) zwischen 1,5 mm und 2,5 mm, vorzugsweise zwischen 2 mm und 2,2 mm aufweist, und wobei die Spule (31) einen Magnetkern (32) aufweist, dessen Höhe im Wesentlichen der Dicke (d_{S}) der Spule (31) entspricht.

14. Möbelplatte nach Anspruch 13, wobei die Spule (31) ein Spulen-Array umfasst, welches eine Anzahl von sich teilweise überlappenden Spulen aufweist.

15. Möbelplatte nach einem der Ansprüche 10 bis 14, wobei das Gehäuse (60) mit Verbindungsmittel (80), vorzugsweise Spreizklemmen, in der Aussparung (20) der Möbelplatte verspreizt ist.
